(19) Europäisches Patentamt
European Patent Office
Office européen des brevets

(11) EP 2 733 282 A1

(12) **EUROPEAN PATENT APPLICATION**
published in accordance with Art. 153(4) EPC

(43) Date of publication:
21.05.2014 Bulletin 2014/21

(51) Int Cl.:
*E04G 21/04* (2006.01)

(21) Application number: 12881534.7

(22) Date of filing: 07.12.2012

(86) International application number:
PCT/CN2012/086104

(87) International publication number:
WO 2014/029179 (27.02.2014 Gazette 2014/09)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 24.08.2012 CN 201210306467

(71) Applicant: Zoomlion Heavy Industry Science and
Technology Co., Ltd.
Changsha, Hunan 410013 (CN)

(72) Inventors:
• HUANG, Ke
Changsha
Hunan 410013 (CN)

• WU, Binxing
Changsha
Hunan 410013 (CN)
• GUO, Gang
Changsha
Hunan 410013 (CN)
• KUANG, Hao
Changsha
Hunan 410013 (CN)
• WU, Dezhi
Changsha
Hunan 410013 (CN)

(74) Representative: Robson, Aidan John
Reddie & Grose LLP
16 Theobalds Road
London WC1X 8PL (GB)

(54) **MATERIAL DISTRIBUTION APPARATUS AND MATERIAL DISTRIBUTION CONTROL METHOD THEREFOR**

(57) The present invention provides a material distributing control method for material distributing apparatus, the material distributing boom of the material distributing apparatus comprises at least two boom sections; wherein, the material distributing control method comprises: first, controlling the first boom section of the material distributing boom to move to a vertical state, and keeping the first boom section in the vertical state; second, controlling other boom sections of the material distributing booms to move to accomplish material distributing work. In addition, the present invention further provides a material distributing apparatus that implements the material distributing control method. On the premise of ensuring maximum material distributing height, the material distributing control method provided in the present invention achieves reduced supporting spans of the legs of the material distributing apparatus in material distributing work and provides possibility for reducing the strength of the legs by sacrificing the material distributing radius to some degree innovatively; therefore, the material distributing control method is helpful for reducing the dimensions of the telescopic legs and reducing reinforcing parts, and thereby effectively attains the purpose of weight reduction for the material distributing apparatus and effectively ensures stability and safety of the material distributing apparatus in material distributing work.

Fig. 6

## Description

## Technical Field

The present invention relates to a material distributing operating method, in particular to a material distributing control method for material distributing apparatus. Moreover, the present invention further relates to a material distributing apparatus for implementing the material distributing control method for material distributing apparatus, such as a concrete pump truck.

## Background

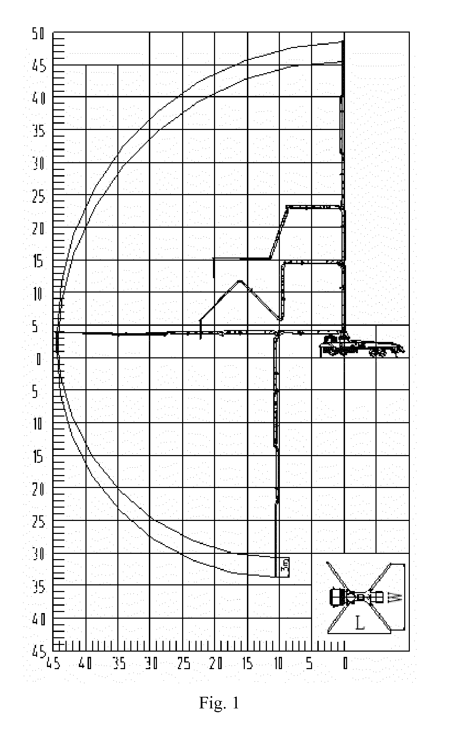

Material distributing apparatuses (e.g., concrete pump trucks) are construction machinery widely used for fluid material pumping and distributing in engineering work. It is known that a concrete pump truck is equipped with a material distributing boom and the material distributing boom is equipped with a concrete delivery pipe. The material distributing boom usually comprises a plurality of boom sections, a hydraulic cylinder is usually hinged between adjacent boom sections, and the two ends of each hydraulic cylinder are hinged to adjacent boom sections; in that way, the corresponding boom sections are driven by extension/retraction of the each hydraulic cylinders to fold or stretch. When the concrete pump truck is not distributing material (e.g., the concrete pump truck is in transport travel state), the material distributing boom is kept in folded state, so as to lower the center of gravity of the concrete pump truck and ensure travel safety of the concrete pump truck. It is known to all that a concrete pump truck is usually equipped with telescopic legs, owing to the fact that the concrete pump truck can't be supported stably merely with the wheels supporting on the ground when the concrete pump truck is distributing material, as shown in the state analysis chart of concrete pump truck in material distributing work in Figure 1, wherein, the part at the lower-right corner in Figure 1 schematically illustrates that the telescopic legs of a concrete pump truck extend and support on the ground; the transverse supporting span of the telescopic legs in extended state is denoted as W, and the longitudinal supporting span is denoted as L. In that situation, the boom sections of the material distributing boom on the concrete pump truck are controlled to fold or stretch appropriately according to the actual demand of material distributing work, so as to accomplish the concrete distributing work.

It is seen from above brief description: a key component of a concrete pump truck is the material distributing boom that delivers concrete to expected material distributing positions. The material distributing boom consists of several boom sections hinged each other, and the boom sections are driven by hydraulic cylinders arranged between them to rotate. During material distributing, the material distributing boom moves into different attitudes to meet the demand for material distributing on the construction site. In short, the requirement for a material distributing boom during material distributing involves material distributing height and material distributing length. Among the technical parameters of a concrete pump truck, the parameters that reflect the material distributing height and material distributing length of the material distributing boom are "maximum material distributing height" and "maximum material distributing radius".

Refer to Figure 1, Figure 1 shows a kinematic state analysis chart of the material distributing boom of a concrete pump truck in material distributing work, wherein, the concrete pump truck whose the maximum material distributing height is 49m shows as example. It is seen from Figure 1: the "maximum material distributing height" is 49m, and the "maximum material distributing radius" is 45m, wherein, "maximum material distributing height" = "maximum material distributing radius" + truck body height (e.g., 4m).

In summary, at present, the requirement for concrete pump truck in Chinese market is evolving towards greater material distributing height. However, increased maximum material distributing height of concrete pump truck (accordingly, increased maximum material distributing radius) means longer material distributing boom of concrete pump truck, and accordingly, more boom sections of material distributing boom, more bays of chassis of the concrete pump truck, and higher weight of the complete machine; especially, as the maximum material distributing height of material distributing boom is increased, the longitudinal and transverse spans of telescopic legs of the concrete pump truck need to be increased greatly, in order to ensure stability of the concrete pump truck in material distributing work; consequently, the telescopic stroke and supporting strength etc of the telescopic legs need to be increased, and therefore the weight of the complete machine will be further increased, often beyond the limit of bearing capacity of road pavement, causing a bottle neck that limits the technological development of concrete pump truck.

Here, it should be noted: though the above description is provided for the case of concrete pump trucks, those problems also exist in a variety of concrete distributing apparatuses, such as concrete distributing trucks, concrete distributing trailers, etc. In addition, the material distributing apparatus in the present invention is not only applicable to concrete distributing work, but also applicable to distributing work of fluid materials, such as mud.

To solve the problems described above, researches in the prior art have been made, mainly focusing on light-weight oriented technical improvement for material distributing booms; specifically, high-strength and light-weight steel material or new materials (e.g., carbon fiber and aluminum alloy materials, etc.) are employed to reduce the weight of material distributing boom. However, such improvements bring new problems, such as severely increased cost and adaptability of new materials to processing and application, etc. For example, the manufacturing cost of carbon fiber material is very high, and additional special molds are required to produce the parts (e.g., boom sections) of a material distributing boom made of carbon fiber material. In addition, carbon fiber and aluminum alloy materials have to be proved in applications on construction sites in harsh environments in terms of their corrosion resistance performance and long-term service reliability, etc.

In view of the above-mentioned problems in the prior art, it is demanded to provide a novel material distributing control method for material distributing apparatus, which requires smaller supporting spans of the material distributing apparatus to accomplish material distributing work at the same material distributing height and therefore is helpful for reducing the weight of the complete machine.

## Summary of the Invention

A technical problem to be solved in the present invention is to provide a material distributing control method for material distributing apparatus, which requires smaller supporting spans of the material distributing apparatus to accomplish material distributing work at the same material distributing height and therefore is helpful for reducing the weight of the material distributing apparatus.

On that basis, another technical problem to be solved in the present invention is to provide a material distributing apparatus, which can achieve greater material distributing height with smaller supporting spans in material distributing work.

To solve the above-mentioned technical problems, the present invention provide a material distributing control method for material distributing apparatus, the material distributing boom of the material distributing apparatus comprises at least two boom sections that are hinged in sequence and can fold and stretch in respect to each other; wherein, the material distributing control method comprises: firstly, controlling the first boom section of the material distributing boom to move to a vertical state, and keeping the first boom section in the vertical state; secondly, controlling the rest boom sections of the material distributing boom to move so as to accomplish material distributing work, and keeping the first boom section always in the vertical state in the entire material distributing process.

Typically, the material distributing apparatus is a concrete pump truck.

In the first step, the first boom section is locked in the vertical state; and, in the second step, the first boom section is always kept locked in the vertical state in the entire material distributing process.

Preferably, in the first step, with all other boom sections of the material distributing boom except for the first boom section kept in locked state, the first boom section is controlled to move to the vertical state; in the second step, all other boom sections of the material distributing boom are unlocked from locked state and controlled to move, so as to accomplish the material distributing work.

Preferably, in the second step, starting from the last boom section of the material distributing boom, all the other boom sections of the material distributing boom are unlocked from locked state and controlled to move in sequence, so as to control all other boom sections of the material distributing boom to stretch out in sequence.

Optionally, in the second step, all other boom sections of the material distributing boom are unlocked at the same time, so that all other boom sections stretch out at the same time.

More specifically, the material distributing control method further comprises a third step: after the material distributing work is accomplished, making all other boom sections of the material distributing boom except for the first boom section to fold onto the first boom section, and then relieving the first boom section from the vertical state and controlling the first boom section to move, so that the first boom section drives all other boom sections to move to the original folded position of the material distributing apparatus.

Preferably, in the third step, from the second boom section to the last boom section of the material distributing boom, all other boom sections of the material distributing boom are folded onto the first boom section in sequence, and then each of all other boom sections is locked in position after those boom sections are folded.

As an alternative embodiment of the present invention within the scope of the technical concept of the material distributing control method, the present invention further provides a material distributing control method for material distributing apparatus, the material distributing boom of the material distributing apparatus comprises at least three boom sections that are hinged in sequence and can fold and stretch in respect to each other; wherein, the material distributing control method comprises: firstly, controlling at least two boom sections adjacent to each other in sequence of the material distributing boom to move to a vertical state, and keeping each of those boom sections in the vertical state, wherein, said at least two boom sections are a part of the boom sections of the material distributing boom and include the first boom section; secondly, controlling all other boom sections of the material distributing boom except for the boom sections kept in the vertical state to move so as to accomplish material distributing work, and keeping each of the boom sections that are in the vertical state always in the vertical state in the entire material distributing process.

Moreover, the present invention provides a material distributing apparatus for implementing the above-mentioned material distributing control method, the material distributing boom of the material distributing apparatus comprises at least two boom sections that are hinged together in sequence and can fold and stretch in respect to each other, and the first boom section of the material distributing boom is hinged to a bearing foundation for the material distributing apparatus; wherein, the material distributing apparatus further comprises a locking device for locking the first boom section in a vertical position.

Preferably, a hydraulic cylinder is hinged between the first boom section and the bearing foundation for the material distributing apparatus and between adjacent boom sections respectively, wherein, a reversing valve for telescopic reversing control is arranged in a hydraulic telescopic control circuit for the hydraulic cylinder between the first boom section and the bearing foundation, and the reversing valve is an O-type three-position four-way reversing valve and is also used as the locking device.

More preferably, the directional control valve in the telescopic control circuit for each hydraulic cylinder hinged between adjacent boom sections of the material distributing boom is an O-type three-position four-way directional control valve, respectively.

Optionally, the locking device is a latch locking mechanism, which comprises a latch, wherein, a supporting plate is fixed on the first boom section, a latch hole on the supporting plate can align to a mating hole on the bearing foundation for the material distributing apparatus when the first boom section is in the vertical state, so that the latch can be inserted into the latch hole and mating hole and thereby lock the first boom section in the vertical state.

Typically, the material distributing apparatus is a concrete pump truck, and the bearing foundation for the material distributing apparatus is a revolving platform of the concrete pump truck.

With the above-mentioned technical scheme, the present invention provides an innovative material distributing control method for material distributing apparatus, wherein, in material distributing work, at least the first boom section of the material distributing boom is kept in a vertical state, and all other boom sections are controlled to stretch or fold as required according to the demand for material distributing after those boom sections stretch out, so as to accomplish material distributing work. That is to say, on the premise of ensuring maximum material distributing height, the material distributing control method disclosed in the present invention achieves reduced supporting spans of legs of the material distributing apparatus and provides possibility for reducing the strength of the legs by sacrificing the material distributing radius to some degree innovatively; therefore, the material distributing control method is helpful for reducing the dimensions of the telescopic legs and reducing reinforcing parts, and thereby effectively attains the purpose of weight reduction for the material distributing apparatus and effectively ensures stability and safety of the material distributing apparatus in material distributing work. In summary, compared to the weight reduction method for material distributing apparatuses (e.g., concrete pump trucks) in the prior art, which achieves weight reduction mainly by material improvement (e.g., utilizes carbon fiber material to produce the boom or other parts), the innovative material distributing control method disclosed in the present invention provides possibility for reducing the design spans and strength of the legs on the chassis, and therefore is helpful for reducing the design weight of the complete machine; such a method can bring breakthroughs and achieve significant beneficial effects very soon in the domain of material distributing apparatuses, especially for concrete pump trucks. The material distributing apparatus in the present invention also have the advantages described above, since it implements the material distributing control method disclosed in the present invention.

Other characteristics and advantages of the present invention will be further detailed in the embodiments hereinafter.

## Description of the Accompanying Drawings

The accompanying drawings are provided to make the present invention understood better and constitute a part of the specification, and are used in conjunction with the embodiments described below to interpret the present invention; however, the protected domain of the present invention is not limited to the accompanying drawings and embodiments. Among the drawings:

Figure 1 is a schematic kinematic state analysis chart of the material distributing boom of a concrete pump truck in material distributing work in the prior art, wherein, the maximum material distributing height of the concrete pump truck is 49m;

Figure 2 is a schematic gravity center variation analysis chart of a concrete pump truck in material distributing work;

Figure 3 is a schematic supporting state analysis chart of the telescopic legs of a concrete pump truck in material distributing work;

Figure 4 is a schematic stress analysis chart of the telescopic legs of a concrete pump truck in material distributing work;

Figure 5 is a flow chart of the material distributing control method for material distributing apparatus in an embodiment of the present invention;

Figure 6 is a schematic kinematic state analysis chart of the material distributing boom of a concrete pump truck that employs the material distributing control method for material distributing apparatus provided in the present invention in material distributing work.

Brief Description of reference numbers in accompanying drawings

| 1 | material distributing boom | 2 | first boom section |
|---|---|---|---|
| 3 | telescopic leg | | |

**Detailed Description of the Embodiments**

Hereinafter the present invention will be detailed in embodiments, with reference to the accompanying drawings. However, it should be appreciated that the embodiments described here are only provided for explain and interpret the present invention, and the protected domain of the present invention is not limited to these embodiments.

First of all, it should be noted: though the material distributing control method for material distributing apparatus provided in the present invention will be described below in the case of concrete pump trucks, it is apparent for those skilled in the art that the material distributing control method for material distributing apparatus in the present invention is not limited to application on concrete pump trucks; instead, the material distributing control method for material distributing apparatus is applicable to any material distributing apparatus that has a material distributing boom, such as concrete distributing trucks and concrete distributing trailers, etc. In addition, the material distributing control method for material distributing apparatus in the present invention is not limited to application in the control of concrete distributing work; in other words, the material distributing control method for material distributing apparatus in the present invention is applicable to the distributing work of any fluid material (e.g., mud). Therefore, the main technical concept of the present invention lies in employing an innovative material distributing control method, which is different to the material distributing control method in the prior art and is not limited to specific application objects. In other words, any material distributing apparatus that has a material distributing boom shall be deemed as falling into the protected domain of the present invention, as long as the material distributing boom employs the material distributing control method disclosed in the present invention to accomplish material distributing work.

To solve the technical problems described above, the conventional idea in the prior art among those skilled in the art is to increase the supporting spans and strength of the telescopic legs as the material distributing height increases, in order to ensure stability of the material distributing apparatus (e.g., a concrete pump truck) in material distributing work; that idea has become a thinking set and has essentially created a technical prejudice among those skilled in the art; consequently, those skilled in the art will not consider any possibility in other aspects when they encounter such circumstances. In addition, in view of the complex gravity center variation of the material distributing boom on a material distributing apparatus in material distributing work, those skilled in the art are scarcely able to analyze possibilities in other aspects without making creative efforts in the technology aspect. Therefore, it is a tough technical challenge for those skilled in the art to reduce required supporting spans and strength while achieving the same material distributing height.

To aid those skilled in the art to understand the technical scheme of the present invention, hereinafter the technical analysis process accomplished to obtain the technical scheme of the present invention will be described first, before the embodiments of the present invention are described in detail. On that basis, the embodiments of the material distributing control method for material distributing apparatus and the material distributing apparatus disclosed in the present invention will be described then.

Specifically, in different states of the material distributing apparatus, e.g., folded state of the material distributing boom and several working states of the material distributing boom in the material distributing work process, the gravity center position of the material distributing boom varies, resulting in varying gravity center position of the complete material distributing apparatus. However, for stability of the material distributing apparatus, the gravity center variation of the material distributing boom in the material distributing work process (i.e., the boom sections of the material distributing boom are in stretched state or semi-stretched state) is of greater significance. It is apparent for those skilled in the art that the stability of the material distributing apparatus is the lowest (i.e., the overturn risk of the material distributing apparatus is the highest) when all the boom sections of the material distributing boom are in stretched state, i.e., the material distributing boom is in fully stretched state. Based on massive analytical data accumulated by the applicant in long-term research and development of material distributing apparatuses such as concrete pump trucks etc., it is known that the gravity center position of the material distributing boom is essentially at approx. 1/3 length of the material distributing boom in length away from the hinge point on the revolving platform, when the material distributing boom is in fully stretched state in the material distributing process. When the material distributing boom is in partially stretched state, the distance between the gravity center position of the material distributing boom and the hinge point on the revolving platform will not exceed 1/3 length of the material distributing boom in fully stretched state essentially, though the gravity center position may vary. Therefore, to effectively ensure reliability of the analysis process, the analysis can be made on the basis of the gravity center position of the material distributing boom in fully stretched state, i.e., the gravity center position of the material distributing boom is at 1/3 length of the material distributing boom in length direction from the hinge point on the revolving platform; in that case, the gravity center position of the material distributing boom is deterministic. When the material distributing boom revolves by 360° with the revolving platform, the gravity center of the material distributing boom, gravity center of the lower fittings (mainly including under-frame, legs, pumping unit, and chassis) except for the material distributing boom of concrete pump truck, and gravity center of the complete machine will follow stable traces of variation.

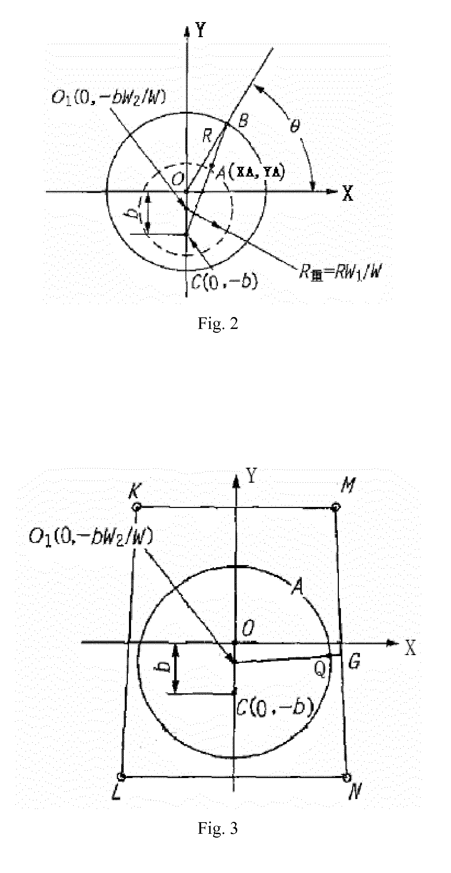

As shown in Figure 2, suppose points A, B, C, and O are the gravity center of the complete machine, gravity center of the material distributing boom, gravity center of the lower fittings, and projected position of the center of revolution of the material distributing boom (i.e., the center of revolution of the revolving platform) on the horizontal plane respectively, and takes the center of revolution of the material distributing boom O as the origin of coordinates; in addition, in view that the gravity center position of the lower fittings of the concrete pump truck doesn't vary, takes the connecting line between point O and point C as the longitudinal axis Y (i.e., along the longitudinal direction of the concrete pump truck), and takes the coordinate axis perpendicular to the Y-axis starting from point O as the X-axis (i.e., along the transverse direction of the concrete pump truck), and thereby set up a coordinate system.

In the coordinate system set up as described above, when the material distributing boom is at a specific position, set OB=R, OC=b, and denote the included angle between the material distributing boom and the X-axis as $\theta$, then the coordinates of the gravity center point B of the material distributing boom are B $(R\cos\theta, R\sin\theta)$, and the coordinates of point C are C_(0, -b). Based on the principles in analytic geometry and gravity center theory and relevant empirical formulae, the gravity center A of the complete material distributing apparatus must be in the connecting line between point B and point C, and the coordinates of point A $(x_A, y_A)$ can be calculated with the following expression (1):

$$\begin{cases} x_A = \dfrac{W_1 R\cos\theta}{W_1 + W_2} = \dfrac{W_1 R\cos\theta}{W} \\[2ex] y_A = \dfrac{W_1 R\sin\theta - bW_2}{W_1 + W_2} = \dfrac{W_1 R\sin\theta - bW_2}{W} \end{cases}$$

Wherein, $W_1$, $W_2$, and W are the weight of the material distributing boom, weight of the lower fittings of the concrete pump truck, and weight of the complete machine respectively, wherein, $W=W_1+W_2$; apparently, the expression (1) is a parametric equation with angle $\theta$ as the parameter; the following expression (2) can be obtained by cancelling out angle $\theta$ and transformation:

$$x_A^2 + \left( y_A + \frac{bW_2}{W} \right)^2 = \left( \frac{RW_1}{W} \right)^2$$

It is seen that the variation trace of gravity center of the complete concrete pump truck is a circle, wherein, the coordinates of the center of circle $O_1$ (see Figure 2) are $(0, -bW_2/W)$, and the radius $R_{\text{堂}}$ is $RW_1/W$.

It is seen from the above brief analysis: the longer the material distributing boom (the length of the material distributing boom represents the radius of material distributing) on the material distributing apparatus (e.g., a concrete pump truck) is, the higher the weight $W_1$ of the material distributing boom will be, the greater the projected length R of the distance between the gravity center of the material distributing boom and the center of revolution of the material distributing boom on the horizontal plane will be, and accordingly the greater the radius $R_1$ of the trace circle of gravity center of the complete machine will be.

Based on the above analysis, the longer the material distributing boom on the concrete pump truck is, the larger the spans of the telescopic legs for supporting the material distributing apparatus (e.g., a concrete pump truck) in material distributing work should be. Specifically, refer to Figure 3, a schematic diagram of the telescopic legs 3 of a concrete pump truck in stretched state, wherein, M, N, K, L are four supporting points of the telescopic legs on both sides of the concrete pump truck on the ground respectively. First, with the center of trace circle $O_1$ of the gravity center of the complete machine as the starting point and the point G as the foot point, we draw a line perpendicular to a side of the quadrilateral (e.g., line segment MN), wherein, the point of intersection between the perpendicular line and the trace circle of gravity center of the complete machine is point Q, and the point of intersection between the perpendicular line and the line segment MN is point G. Suppose the length of line segment QG is L1, then L1 is the shortest distance from a point on the trace circle of the gravity center of the complete machine to the line segment MN when the boom is revolving; in the same way, we find out the corresponding shortest line segments L2, L3, and L4 from a point on the trace circle of the gravity center of the complete machine to the other three sides of the quadrilateral supporting plane. Next, compare the L1, L2, L3, and L4 to find out the shortest one among them, and denote the shortest distance as $S_{min}$, i.e., $S_{min}$=min{L1, L2, L3, L4}. Then, the stability of the complete machine at this moment can be measured with $S_{min}$. Apparently, it is known from the theory of stability: the length of line segments L1, L2, L3 and L4 must be greater than zero; otherwise the pump truck will tip over. Therefore, it is seen that L1, L2, L3 and L4 directly reflect the transverse and longitudinal spans of the telescopic legs, and the spans should be greater than or equal to the diameter of the trace circle of gravity center of the complete material distributing apparatus (i.e., the quadrilateral formed by the four supporting points should encircle the trace circle of gravity center of the complete machine). It is seen from the expression (1): the trace circle of gravity center of the complete machine is proportional to the length of the material distributing boom, weight of the material distributing boom, and gravity center position of the material distributing boom etc.; in that case, to ensure stability of the material distributing apparatus, the quadrilateral formed by the four supporting points must encircle the trace circle of gravity center of the complete machine; in addition, the spans of the telescopic legs are also directly related with the length of the material distributing boom, weight of the material distributing boom, and gravity center position of the material distributing boom etc.. Especially, it should be noted that the analysis charts in Figure 2 and Figure 3 are based on projection on the horizontal plane. Therefore, the length of the material distributing boom virtually represents the material distributing radius of the material distributing apparatus, which is to say, the spans of the telescopic legs are directly related with the material distributing radius of the material distributing apparatus; when the material distributing radius decreases, it means that the spans of the telescopic legs can be reduced.

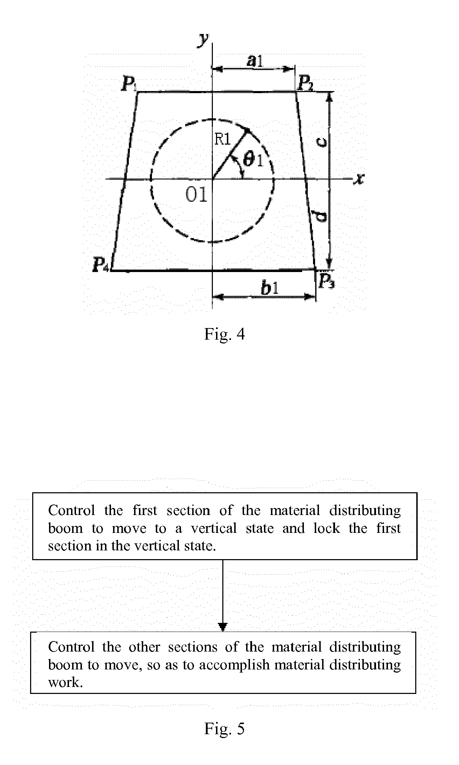

Please see the stress analysis chart of the telescopic legs in Figure 4, wherein, $P_1$~$P_4$ are the upward counter force exerted by the ground on the telescopic legs at the four supporting points (abbreviated as counter force of ground), and the broken circle is the trace circle of gravity center of the material distributing apparatus itself(e.g., a concrete pump truck). Usually, the telescopic legs on a material distributing apparatus are arranged into an isosceles trapezoid, i.e., arranged in symmetry in relation to the longitudinal center line of the material distributing apparatus. Now, with the center line of the trapezoid as the Y-axis and a straight line passing through the circle center O1 of the trace circle of gravity center of the material distributing apparatus and perpendicular to the Y-axis as the X-axis, we set up a rectangular coordinate system as shown in Figure 4; suppose the angle θ varies within a range of $0° \leq \theta_1 \leq 90°$; in that case, to ensure stability of the material distributing apparatus (e.g., a concrete pump truck), force balance and torque balance must be maintained. Based on balance equations of spatial parallel forces, the following expression (3) can be obtained:

$$\begin{cases} \sum P_z = 0 \\ \sum M_x(P) = 0 \\ \sum M_y(P) = 0 \end{cases} \Rightarrow \begin{cases} P_1 + P_2 + P_3 + P_4 - W = 0 \\ c(P_1 + P_2) - d(P_3 + P_4) - WR_1 \sin\theta_1 = 0 \\ a_1(P_1 - P_2) + b_1(P_4 - P_3) + WR_1 \cos\theta_1 = 0 \end{cases}$$

In the expression (3), $P_1$, $P_2$, $P_3$, and $P_4$ are counter forces of ground applied on the telescopic legs at the four supporting points respectively, and $\theta_1$ is the included angle between the connecting line from a point on the trace circle of gravity center to the origin $O_1$ and the X-axis; $a_1$ is 1/2 length of the top side of the isosceles trapezoid, $b_1$ is 1/2 length of the bottom side of the isosceles trapezoid; $R_1$ is the radius of the trace circle of gravity center of the material distributing apparatus; W is the weight of the complete material distributing apparatus (e.g., a concrete pump truck).

For a material distributing apparatus, when the gravity center of the complete material distributing apparatus is within the quadrilateral formed by the four supporting points of the telescopic leg, the weight of the complete machine will be shared by the telescopic legs at the four supporting points, which is to say, the four supporting points of the telescopic legs will contact with the ground. In the expression (3), for clarity purpose, suppose the material distributing apparatus has a tendency of tip-over rightward around Y-axis in Figure 4 in an extreme case; in that case, $P_1$ and $P_4$ are zero, and the following expression (4) can be obtained from the three equations in the expression (3), when $P_2$ is calculated:

$$P_2 = \frac{R_1 \cos \theta_1 - b_1}{a_1 - b_1} W$$

It is seen from the expression (4): the amplitude of $P_2$ is positively correlated with the radius $R_1$ of the trace circle of gravity center of the material distributing apparatus. As described above, when the length of the material distributing boom on the material distributing apparatus decreases and therefore the material distributing radius decreases, the radius $R_1$ of the trace circle of gravity center of the material distributing apparatus will decrease accordingly; in that case, the spans of the telescopic legs (i.e., transverse and longitudinal spans) can be reduced, as long as the quadrilateral formed by the four supporting points of the telescopic legs encircles the trace circle of gravity center of the complete machine; when the radius $R_1$ of the trace circle of gravity center and the transverse span of the telescopic legs (i.e., $a_1$ and $b_1$ in the expression (4)) decrease, it is seen from the expression (4) that the value of $P_2$ may not increase even in extreme cases; for example, when the material distributing radius decreases a specific value, the value of $P_2$ even can be decreased rather than increased by designing the decreased amount of the transverse span of the telescopic legs rationally. Likewise, the calculation formulae of $P_1$, $P_3$, and $P_4$ can be obtained by similar derivation from the expression (3). For clarity purpose, the analysis and calculation can be based on a presumption of a critical tip-over condition similar to above condition (under critical condition, the counter force of ground applied on corresponding legs is maximum or essentially maximum, and the stability is enough to meets the requirement for normal operation of the material distributing apparatus). Such a case is very ideal for the design of the material distributing apparatus. In brief, by decreasing the transverse span of the telescopic legs (the telescopic stroke of the telescopic legs can be reduced, and accordingly the weight of the telescopic legs can be reduced), the weight of the complete machine can be reduced; furthermore, when the material distributing radius of the material distributing apparatus is decreased by a specific value, the counter force of ground at the supporting points can even be decreased rather than increased, by arranging the spans of the telescopic legs rationally; that is to say, the strength of the supporting parts of the telescopic legs can be decreased on the premise of meeting the functional requirements; thus, it is helpful that the weight of the complete material distributing apparatus can be further reduced.

In summary, it is seen from above analysis: the spans of the legs depend on the maximum material distributing radius of the material distributing boom. For material distributing apparatuses (e.g. long-boom concrete pump trucks), a realistic requirement is to increase the maximum material distributing height over and over again, since these material distributing apparatuses have to cope with buildings that are higher and higher. If the material distributing radius can be reduced partially while ensuring the maximum material distributing height, as described above, the leg spans can be decreased, and the counter force of ground applied on the telescopic legs can be decreased or remain unchanged by arranging the decreased amount of leg spans; in that way, the design strength of the under-frame and legs of material distributing apparatuses (e.g., concrete pump trucks) can be decreased; thus, the sizes and weight of the telescopic leg can be reduced by decreasing the leg spans of the telescopic leg; moreover, the weight of the supporting parts (e.g., legs) can be further reduced and thereby the weight of the complete material distributing apparatus can be greatly reduced, by decreasing the strength of the supporting parts (e.g., legs).

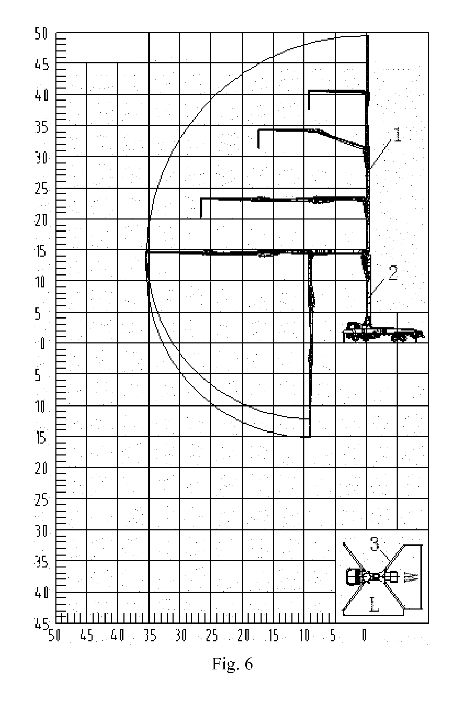

Based on the above analysis, as shown in Figure 5 and Figure 6, the present invention provide a novel material distributing control method for concrete pump truck, the material distributing boom 1 of the material distributing apparatus comprises at least two boom sections that are hinged in sequence and can fold and stretch in respect to each other; wherein, the material distributing control method comprises: first, controlling the first boom section 2 of the material distributing boom 1 to move to a vertical state, and keeping the first boom section 2 in the vertical state; second, controlling the rest boom sections of the material distributing boom 1 to move so as to accomplish material distributing work, and keeping the first boom section 2 always in the vertical state in the entire material distributing process.

Here, it should be note: within the scope of the above technical concept, the first boom section 2 can be kept in vertical state in different ways; for example, in a specific form in the material distributing apparatus described below, preferably, in the first step, the first boom section is locked in the vertical state; and, in the second step, the first boom section is always kept locked in the vertical state in the entire material distributing process; the locking can be implemented easily by means of mechanical locking or hydraulic locking; thus, in the sequent material distributing work, only the other boom sections have to be controlled to move, and therefore the operation is more convenient and easier.

Typically, the material distributing apparatus can be a concrete pump truck. For a material distributing apparatus, it is known that the first boom section 2 of the material distributing boom 1 is the boom section hinged to a revolving platform; in the present invention, that boom section is defined more widely as a boom section of the material distributing boom 1 that is directly hinged to a bearing foundation or stand (e.g., a revolving platform) for the material distributing apparatus.

Figure 6 is a schematic analysis diagram of the material distributing range of the material distributing boom 1 on a concrete pump truck that employs the material distributing control method provided in the present invention, wherein, the maximum material distributing height of the concrete pump truck is 49m. As shown in Figure 6, when the material distributing control method provided in the present invention is used, the material distributing range of the concrete pump truck is: "maximum material distributing height" = "maximum material distributing radius" + "truck body height" (e.g., 4m) + length of the first boom section; "maximum material distributing radius" = "length of the material distributing boom in fully stretched state" - length of the first boom section.

Specifically, when a material distributing apparatus (e.g., a concrete pump truck) employs the control method described above in the present invention, since the number and length of the boom sections of the material distributing boom remain unchanged when compared to the existing products of the same model, in the material distributing work, first, the first boom section 2 move to a vertical state and is locked in the vertical position; in the subsequent material distributing operation, only the other boom sections of the material distributing boom 1 are controlled to move to accomplish material distributing work, which is to say, the present invention employs a unique material distributing control method to ensure the maximum material distributing height of the material distributing apparatus; on that basis, since the first boom section 2 only serves for increasing the material distributing height but doesn't participate in the function for increasing the material distributing radius, the maximum material distributing radius of the material distributing apparatus in this case depends on the total length of the other boom sections of the material distributing boom 1; in other words, when the material distributing apparatus employ the unique material distributing control method provided in the present invention, the maximum material distributing radius can be decreased while the maximum material distributing height is ensured; thus, the supporting spans of the telescopic legs on the material distributing apparatus can be decreased, and the weight of the supporting parts (e.g., telescopic legs) can be reduced by decreasing the supporting strength of the telescopic legs appropriately, so that the weight of the complete machine can be reduced greatly.

Within the scope of the above technical concept of the material distributing control method in the present invention, preferably, in the first step, to move the first boom section 2 to a vertical state conveniently, the first boom section 2 can be moved to the vertical state while all other boom sections of the material distributing boom 1 are kept in locked state. That approach can prevent the other boom sections from moving accidentally and disturbing the movement of the first boom section 2 when the first boom section 2 is moved.

In the preferred embodiment described above, since the movement of the material distributing boom is essentially controlled in a sequential manner, preferably, in the second step, starting from the last boom section of the material distributing boom 1, all other boom sections of the material distributing boom 1 are unlocked from locked state and controlled to move in sequence, so as to control all other boom sections of the material distributing boom 1 to stretch out in sequence. Here, it should be noted: the other boom sections of the material distributing boom are controlled to stretch out in sequence only at the beginning of the material distributing work, so as to facilitate the control of movement in the subsequent material distributing operation; in the actual material distributing process, in case the other boom sections are in stretched state and don't interfere with each other, any of them can be controlled to stretch or fold as required for material distributing.

Of course, the movement pattern of the other boom sections of the material distributing boom described above is only a typical movement pattern of the material distributing boom, and such sequentially controlled movement starts from the last boom section, to avoid interference in the movement in a case that the movement starts from the second boom section while the other boom sections are folded together. Of course, the movement pattern of the other boom sections of the material distributing boom 1 is not limited to the sequential movement pattern described above; optionally, in the second step, the other boom sections of the material distributing boom 1 can be unlocked from locked state at the same time and controlled to stretch out at the same time, provided that the simultaneous movement of the other boom sections of the material distributing boom 1 doesn't result in interference.

Moreover, as a material distributing control method for material distributing apparatus that is more complete in operation, further, the material distributing control method further comprises a third step, i.e., controlling all other boom sections of the material distributing boom 1 to fold onto the first boom section 2 after the material distributing work is accomplished, and then unlocking the first boom section 2 from locked state and controlling the first boom section 2 to move, so that the first boom section 2 drives the other boom sections of the material distributing boom 1 to move to the original folded position of the material distributing apparatus.

Preferably, in the third step, from the second boom section to the last boom section of the material distributing boom 1, all other boom sections of the material distributing boom are controlled to fold onto the first boom section 2 in sequence, and then locked in position after those boom sections are folded. An advantage of such operation is: when the first boom section 1 is returned to the original position, it can drive the other boom sections to the original folded position of the material distributing apparatus and prevent the other boom sections from moving accidentally and resulting in interference when the first boom section 1 is moved; thus, the reliability and safety of operation can be improved.

In addition, it should be noted additionally: the above embodiment is described only for the case of the first boom section; actually, it can be seen from the technical concept of the present invention: the present invention is not limited to the case in which the first boom section 2 is locked in a vertical state; instead, at least two boom sections of the material distributing boom 1 can be locked in a vertical state in sequence, starting from the first boom section 2, while the material distributing radius can be formed by the rest boom sections to accomplish material distributing work. However, actually such a variant is already covered by the scope of protection of the basic embodiment described above; the boom sections must be locked up in sequence starting from the first boom section, regardless of the number of boom sections to be locked in a vertical state; otherwise the vertical state of the rest boom sections will be destroyed if the first boom section 2 can move freely in the material distributing work process.

While a basic embodiment and a preferred embodiment of the material distributing control method for material distributing apparatus disclosed in the present invention are described above, it should be noted that the main technical concept of the present invention lies in providing a material distributing control method, with which the spans of telescopic legs of the material distributing apparatus (e.g., a concrete pump truck) can be decreased, and thereby the weight of the complete material distributing apparatus can be reduced effectively. That material distributing control method doesn't have to be implemented by improving the control elements (e.g., hydraulic elements) of the material distributing apparatus specifically; for example, after a concrete pump truck employs the material distributing control method disclosed in the present invention, the supporting spans of the telescopic legs of the concrete pump truck can be decreased accordingly by means of appropriate design, and thereby the weight of the complete machine can be reduced. Though specially designed control techniques can be used when the material distributing control method disclosed in the present invention is implemented in the material distributing apparatus, those control techniques are not required constituents of the present invention; in other words, the features of the present invention can be implemented by manual operation of the operator, even if those control techniques are not used; for example, the first boom section can be locked in a vertical state by means of a manually operated latch locking mechanism, or, an automatic mechanical arm can be used to provide additional support for the first boom section 1 and thereby fix the first boom section 1 in the vertical state. That is to say, the material distributing control method for material distributing apparatus described above in the present invention is not limited to specific control techniques, and any material distributing apparatus shall be deemed as falling into the protected domain of the present invention as long as it employs the material distributing control method disclosed in the present invention.

To aid those skilled in the art to understand the present invention, hereinafter an embodiment of material distributing apparatus will be described, wherein, the material distributing apparatus has appropriate structures to implement the material distributing control method described above.

Specifically, the present invention provides a material distributing apparatus, wherein, a material distributing boom 1 of the material distributing apparatus comprises at least two boom sections that are hinged in sequence and can fold and stretch in respect to each other; the material distributing apparatus further comprises a locking device for locking the first boom section 2 of the material distributing boom 1 in a vertical position.

As described above, since the first boom section 2 of the material distributing boom 1 is directly hinged to a bearing foundation (e.g., a revolving platform) for the material distributing apparatus, the locking device can be a simple latch locking mechanism in the simplest form; for example, an supporting plate is fixed on the first boom section 1, a latch hole on the supporting plate on the first boom section 2 will align to a mating hole on the material distributing apparatus (e.g., a revolving platform) when the first boom section 2 is in a vertical state, so that the latch can be inserted into the latch hole on the supporting plate and the mating hole, and thereby the first boom section 2 can be locked in the vertical state conveniently. If the boom sections locked in a vertical state include at least two boom sections adjacent to the first boom section in sequence, a supporting plate that has a latch hole is arranged between the first boom section and the second boom section; thus, after the first boom section is locked, the second boom section can be locked to the first boom section by means of a latch similar to the latch described above, and the rest boom sections can be locked in the same way.

Of course, since material distributing apparatuses are a sort of construction machinery and usually employs hydraulic control systems, the locking device on a material distributing apparatus (e.g., a concrete pump truck) is implemented mainly with hydraulic control technology. In the simplest form, the hydraulic cylinders are hinged between the first boom section 2 of the material distributing boom 1 and the bearing foundation (e.g., a revolving platform) for the material distributing apparatus and between the adjacent boom sections respectively, wherein, as known to all, a reversing valve for telescopic reversing control is arranged in the hydraulic telescopic control circuit for the hydraulic cylinder hinged between the first boom section 2 and the bearing foundation for the material distributing apparatus, and the reversing valve is an O-type three-position four-way reversing valve and also used as the locking device. Specifically, when the first boom section 2 is moved to a vertical state, it can be locked in the vertical state with the mid-position cut-off function of the O-type three-position four-way reversing valve, by switching the O-type three-position four-way reversing valve to a middle position.

Preferably, the reversing valves in the telescopic control circuit for each hydraulic cylinder hinged between adjacent boom sections of the material distributing boom 1 are an O-type three-position four-way reversing valves, respectively. Thus, with the mid-position cut-off function of the O-type three-position four-way reversing valves, the other boom sections can be locked in position conveniently. Of course, for a material distributing apparatus, the locking function of hydraulic cylinders can be implemented essentially with O-type three-position four-way reversing valves. In case the oil pressure is high, balancing valves can be added further to implement the lock function, if the leak tightness attained with the O-type three-position four-way reversing valves is believed as inadequate. For those skilled in the art, these features can be implemented with a variety of techniques, and therefore will not be detailed any more.

It is seen from above description: a technical key of the present invention is: the present invention mainly provides a material distributing control method that is different to conventional methods; for example, for a common concrete pump truck, after the telescopic legs of the concrete pump truck stretch out and support on the ground, the first boom section 2 is controlled to stretch out and move to a vertical state, and then locked in the vertical state by locking the hydraulic cylinder hinged between the first boom section 2 and the revolving platform; in that case, first, the other boom sections are controlled to stretch out in sequence, and then appropriate boom sections can be controlled as required to stretch or fold, so as to accomplish material distributing work.

As can be seen from above description, the advantages of the present invention lie in: the present invention provides an innovative material distributing control method for material distributing apparatus, wherein, in material distributing work, at least the first boom section 2 of the material distributing boom is kept in a vertical state, and all other boom sections are controlled to stretch or fold as required according to the requirement for material distributing after those boom sections stretch out, so as to accomplish material distributing work. That is to say, on the premise of ensuring maximum material distributing height, the material distributing control method disclosed in the present invention achieves reduced supporting spans of the legs 3 of the material distributing apparatus by sacrificing the material distributing radius to some degree innovatively and provides possibility for reducing the strength of the legs 3 by arranging the reduced supporting spans rationally; therefore, the material distributing control method is helpful for reducing the dimensions of the telescopic legs 3 and reducing reinforcing parts, and thereby effectively attains the purpose of weight reduction for the material distributing apparatus and effectively ensures stability and safety of the material distributing apparatus in material distributing work. In summary, compared to the weight reduction method for material distributing apparatuses (e.g., concrete pump trucks) in the prior art, which achieves weight reduction mainly by material improvement (e.g., utilizes carbon fiber material to produce the boom or other parts), the innovative material distributing control method disclosed in the present invention provides possibility for reducing the design spans and strength of the legs on the under-frame, and therefore is helpful for reducing the design weight of the complete machine; such a method can bring breakthroughs and achieve significant beneficial effects very soon in the domain of material distributing apparatuses, especially for concrete pump trucks. The material distributing apparatus in the present invention also have the advantages described above, since it implements the material distributing control method disclosed in the present invention.

While some preferred embodiments of the present invention are described above with reference to the accompanying drawings, the present invention is not limited to the details in those embodiments. Those skilled in the art can make modifications and variations to the technical scheme of the present invention, without departing from the spirit of the present invention. However, all such modifications and variations shall be deemed as falling into the protected domain of the present invention.

In addition, it should be appreciated that the technical features described in the above embodiments can be combined in any appropriate manner, provided that there is no conflict among the technical features in the combination. To avoid unnecessary iteration, such possible combinations will not be described here in the present invention.

Moreover, the different embodiments of the present invention can be combined freely as required, as long as the combinations don't deviate from the ideal and spirit of the present invention. However, such combinations shall also be deemed as falling into the scope disclosed in the present invention.

## Claims

**1.** A material distributing control method for material distributing apparatus, the material distributing boom (1) of the material distributing apparatus comprises at least two boom sections that are hinged in sequence and can fold and stretch in respect to each other; wherein, the material distributing control method comprises:

firstly, controlling the first boom section (2) of the material distributing boom (1) to move to a vertical state, and keeping the first boom section (2) in the vertical state;
secondly, controlling the other boom sections of the material distributing boom (1) to move to accomplish material distributing work, and keeping the first boom section (2) always in the vertical state in the entire material distributing process.

**2.** The material distributing control method for material distributing apparatus according to claim 1, wherein, the material distributing apparatus is a concrete pump truck.

3. The material distributing control method for material distributing apparatus according to claim 1, wherein, in the first step, the first boom section is locked in the vertical state; and, in the second step, the first boom section is always kept locked in the vertical state in the entire material distributing process.

4. The material distributing control method for material distributing apparatus according to claim 3, wherein, in the first step, with all other boom sections of the material distributing boom (1) except for the first boom section kept in locked state, the first boom section (1) is controlled to move to a vertical state; in the second step, all the other boom sections of the material distributing boom (1) are unlocked from locked state and controlled to move, so as to accomplish the material distributing work.

5. The material distributing control method for material distributing apparatus according to claim 4, wherein, in the second step, starting from the last boom section of the material distributing boom (1), all other boom sections of the material distributing boom (1) are unlocked from locked state and controlled to move in sequence, so as to control all other boom sections of the material distributing boom (1) to stretch out in sequence.

6. The material distributing control method for material distributing apparatus according to claim 4, wherein, in the second step, the other boom sections of the material distributing boom (1) are unlocked from locked state at the same time and controlled to stretch out at the same time.

7. The material distributing control method for material distributing apparatus according to any one of claims 1-6, further comprising a third step: controlling all other boom sections of the material distributing boom (1) except for the first boom section to fold onto the first boom section (2) after the material distributing work is accomplished, and then unlocking the first boom section (2) from locked state and controlling the first boom section (2) to move, so that the first boom section (2) drives the other boom sections of the material distributing boom (1) to move to the original folded position of the material distributing apparatus.

8. The material distributing control method for material distributing apparatus according to claim 7, wherein, in the third step, from the second boom section to the last boom section of the material distributing boom (1), all other boom sections of the material distributing boom (1) are controlled to fold onto the first boom section (2) in sequence, and then locked in position after these boom sections are folded.

9. A material distributing control method for material distributing apparatus, the material distributing boom (1) of the material distributing apparatus comprises at least three boom sections that are hinged in sequence and can fold and stretch in respect to each other; wherein, the material distributing control method comprises:

firstly, controlling at least two boom sections adjacent to each other in sequence among the boom sections of the material distributing boom (1) to move to a vertical state, and keeping those boom sections in the vertical state, wherein, said at least two boom sections are a part of the boom sections of the material distributing boom (1) and include the first boom section (2);

secondly, controlling the other boom sections of the material distributing boom (1) except for the boom sections kept in the vertical state to move to accomplish material distributing work, and keeping the boom sections in the vertical state always in the vertical state in the entire material distributing process.

10. A material distributing apparatus, the material distributing boom (1) of the material distributing apparatus comprises at least two boom sections that are hinged in sequence and can fold and stretch in respect to each other, and the first boom section (2) of the material distributing boom (1) is hinged to a bearing foundation for the material distributing apparatus; wherein, the material distributing apparatus further comprises a locking device for locking the first boom section (2) in a vertical position.

11. The material distributing apparatus according to claim 10, wherein, a hydraulic cylinder is hinged between the first boom section (2) and the bearing foundation for the material distributing apparatus and between adjacent boom sections respectively, wherein, a reversing valve for telescopic reversing control is arranged in a hydraulic telescopic control circuit for the hydraulic cylinder between the first boom section (2) and the bearing foundation, and the reversing valve is an O-type three-position four-way reversing valve and is also used as the locking device.

12. The material distributing apparatus according to claim 11, wherein, the directional control valve in the telescopic control circuit for each hydraulic cylinder hinged between adjacent boom sections of the material distributing boom (1) is an O-type three-position four-way directional control valve, respectively.

13. The material distributing apparatus according to claim 10, wherein, the locking device is a latch locking mechanism, which comprises a latch, wherein, a supporting plate is fixed on the first boom section (2), a latch hole on the supporting plate will align to a mating hole on the bearing foundation for the material distributing apparatus when the first boom section (2) is in a vertical state, so that the latch can be inserted into the latch hole and mating hole and thereby lock the first boom section (2) in the vertical state.

14. The material distributing apparatus according to any one of claims 10~13, wherein, the material distributing apparatus is a concrete pump truck, and the bearing foundation for the material distributing apparatus is a revolving platform on the concrete pump truck.

Fig. 1

Fig. 2

Fig. 3

Fig. 4

Control the first section of the material distributing boom to move to a vertical state and lock the first section in the vertical state.

Control the other sections of the material distributing boom to move, so as to accomplish material distributing work.

Fig. 5

Fig. 6

## INTERNATIONAL SEARCH REPORT

| International application No. |
|---|
| PCT/CN2012/086104 |

### A. CLASSIFICATION OF SUBJECT MATTER

E04G 21/04 (2006.01) i

According to International Patent Classification (IPC) or to both national classification and IPC

### B. FIELDS SEARCHED

Minimum documentation searched (classification system followed by classification symbols)

IPC: E04G 21/04; E04G 21/02; E04G 21/00

Documentation searched other than minimum documentation to the extent that such documents are included in the fields searched

Electronic data base consulted during the international search (name of data base and, where practicable, search terms used)

CNPAT, CNKI, WPI, EPODOC: arm+, girder, shank, pole, upright+, perpendicular, plumb, vertical, pump, stead+, stabl+, stability, lock+, concrete, slurry, vehicle, degree+, angle, control+, dominat+, regulat+, cylinder, hydrocylinder, zoomlion, huang ke, wu binxing, guo gang, kuang hao, wu dezhi, 90 degree, >88, <91, right angle, reversing

### C. DOCUMENTS CONSIDERED TO BE RELEVANT

| Category* | Citation of document, with indication, where appropriate, of the relevant passages | Relevant to claim No. |
|---|---|---|
| E | CN 202787997 U (ZOOMLION HEAVY INDUSTRY SCIENCE & TCHNOLOGY DEVELOPMENT CO., LTD) 13 March 2013 (13.03.2013) claims 1 to 5 | 10-14 |
| X | CN 101512081 A (PUTZMEISTER AG) 19 August 2009 (19.08.2009) description, page 4, line 3 to page 6, line 10 and figures 1a to 3b | 1-10, 13, 14 |
| Y | description, page 4, line 3 to page 6, line 10 and figures 1a to 3b | 11, 12 |
| X | CN 101654075 A (SHANGHAI HOLDGLOBE CO LTD) 24 February 2010 (24.02.2010) description, page 4, line 21 to page 6, line 3 and figures 1 to 5 | 1-10, 13, 14 |
| Y | description, page 5, paragraph [0001] and figures 1 and 4 | 11, 12 |

☒ Further documents are listed in the continuation of Box C.　　☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 28 April 2013 (28.04.2013) | 30 May 2013 (30.05.2013) |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>YIN, Xueying<br><br>Telephone No. (86-10) 62085027 |
|---|---|

Form PCT/ISA /210 (second sheet) (July 2009)

EP 2 733 282 A1

# INTERNATIONAL SEARCH REPORT

| International application No. |
| --- |
| PCT/CN2012/086104 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | CN 201581641 U (CONSTRUCTION MACHINERY BRANCH OF XCMG CONSTRUCTION MACHINERY CO., LTD) 15 September 2010 (15.09.2010) the whole document | 1-14 |
| A | JP 2001355338 A (MITSUBISHI HEAVY IND LTD) 26 December 2001 (26.12.2001) the whole document | 1-14 |
| A | DE 20119806 U1 (TBG TRANSPORTBETON RHEINHESSEN GMBH & CO) 28 March 2002 (28.03.2002) the whole document | 1-14 |
| A | EP 1849931 A2 (ITALIANA FORME ACCIAIO) 31 October 2007 (31.10.2007) the whole document | 1-14 |

Form PCT/ISA /210 (continuation of second sheet) (July 2009)

19

# INTERNATIONAL SEARCH REPORT
## Information on patent family members

| | International application No. |
|---|---|
| | PCT/CN2012/086104 |

| Patent Documents referred in the Report | Publication Date | Patent Family | Publication Date |
|---|---|---|---|
| CN 202787997 U | 13.03.2013 | None | |
| CN 101512081 A | 19.08.2009 | CN 101512081 B | 10.10.2012 |
| | | DE 102006031257 A1 | 10.01.2008 |
| | | WO 2008003548 A1 | 10.01.2008 |
| | | EP 2038493 A1 | 25.03.2009 |
| | | KR 20090035476 A | 09.04.2009 |
| | | INKOLNP 200805119 E | 27.03.2009 |
| | | US 2009283163 A1 | 19.11.2009 |
| | | US 7909059 B2 | 22.03.2011 |
| | | EP 2038493 B1 | 28.09.2011 |
| | | AT 526472 T | 15.10.2011 |
| | | EA 200970083 A1 | 28.04.2009 |
| | | EA 012868 B1 | 30.12.2009 |
| | | ES 2371680 T | 09.01.2012 |
| CN 101654075 A | 24.02.2010 | CN 101654075 B | 27.06.2012 |
| CN 201581641 U | 15.09.2010 | None | |
| JP 2001355338 A | 26.12.2001 | None | |
| DE 20119806 U1 | 28.03.2002 | DE 10145632 A1 | 17.04.2003 |
| EP 1849931 A2 | 31.10.2007 | IT 1374633 B | 17.05.2010 |
| | | EP 1849931 A3 | 02.03.2011 |
| | | ITMI 20060818 A1 | 25.10.2007 |

Form PCT/ISA /210 (patent family annex) (July 2009)